Europäisches Patentamt

(19) European Patent Office

Office européen des brevets

(11) Veröffentlichungsnummer: **0 310 775**
**B1**

(12) # EUROPÄISCHE PATENTSCHRIFT

(45) Veröffentlichungstag der Patentschrift:
26.09.90

(51) Int. Cl.⁵: **F16B 5/02**

(21) Anmeldenummer: **88112276.6**

(22) Anmeldetag: **29.07.88**

(54) Verschlusseinrichtung zum Verbinden plattenförmiger Bauteile.

(30) Priorität: **03.09.87 DE 3729423**

(43) Veröffentlichungstag der Anmeldung:
**12.04.89 Patentblatt 89/15**

(45) Bekanntmachung des Hinweises auf die Patenterteilung:
**26.09.90 Patentblatt 90/39**

(84) Benannte Vertragsstaaten:
**DE ES FR GB IT NL**

(56) Entgegenhaltungen:
**DE-A- 2 700 605**
**DE-A- 2 947 612**
**DE-B- 1 450 944**
**DE-B- 1 475 041**
**US-A- 4 377 361**

(73) Patentinhaber: **CAMLOC GmbH, Industriestrasse 6, D-6233 Kelkheim(DE)**

(72) Erfinder: **Döbbeler, Peter c/o Keil & Schaafhausen, Patentanwälte Eysseneckstrasse 31, D-6000 Frankfurt am Main(DE)**

(74) Vertreter: **Keil, Rainer A., Dipl.-Phys. Dr. et al, KEIL & SCHAAFHAUSEN Patentanwälte Eysseneckstrasse 31, D-6000 Frankfurt am Main 1(DE)**

## Beschreibung

Die Erfindung betrifft eine Verschlußeinrichtung zum Verbinden plattenförmiger Bauteile, bestehend aus einem mit einem Innengewinde versehenen und durch fluchtende Öffnungen der Bauteile hindurchzuführenden Zapfen, einem mit dem Zapfen über einen in seinem Inneren zentrisch angebrachten Gewindebolzen verspannbaren, im wesentlichen topfförmigen Aufnahmeelement, welches mit entgegen der Eintrittsrichtung des Zapfens wirkenden Federmitteln versehen ist, und mit in dem Aufnahmeelement befindlichen Sicherungsmitteln, welche ein unbeabsichtigtes Lösen des Zapfens aus der verspannten Stellung verhindern und zwei auf dem Gewindebolzen aufgenommene in Sicherungsstellung aneinander angreifende Sicherungsscheiben aufweisen, von welchen die zapfenseitige Sicherungsscheibe drehbar und bis zu einem äußeren Anschlag des Aufnahmeelements axial verschiebbar und die zapfenabgewandte Sicherungsscheibe drehfest, jedoch axial gegen die Federmittel verschiebbar in dem Aufnahmeelement geführt sind und wobei die zapfenseitige Sicherungsscheibe bei Einwirkung eines einen bestimmten Wert überschreitenden, von dem Zapfen aufgebrachten Drehmoments gegen die zapfenabgewandte Sicherungsscheibe verdrehbar und dabei der Zapfen auf den Gewindebolzen bis in die verspannte Stellung aufschraubbar ist.

Derartige Verschlußeinrichtungen sind bekannt (siehe z.B. DE-B 1 450 944). Sie dienen vor allem zum lösbaren Befestigen von strukturellen und nichtstrukturellen Verbindungen, die hohen Zug- und Scherbeanspruchungen sowie Vibrationen ausgesetzt sind, wie dies bei Flugzeugen, dort z.B. zum Befestigen von Abdeckplatten, Verkleidungen und Wartungsklappen, der Fall ist. Insbesondere in diesem Einsatzbereich sind derartige Verschlußeinrichtungen einer großen Anzahl von Lastwechseln ausgesetzt, wobei einzelne Kräfte verhältnismäßig hohe Werte annehmen können. Die zusätzlich auftretenden Vibrationen fördern das Lockern einer derartigen Verschlußeinrichtung. Deshalb besitzen die bekannten Verschlußeinrichtungen von den Elementen zur Erzeugung der Verspannungskräfte getrennte Sicherungsmittel, die ein unbeabsichtigtes Lösen der Verschlußeinrichtung im verspannten Zustand verhindern sollen. Es hat sich jedoch in der Praxis gezeigt, daß Lastwechsel und Vibrationen auftreten können, bei denen die Sicherungsmittel, die bisher auf dem Prinzip von zwei gegeneinander verzahnten Scheiben beruhen, versagen, so daß sich die Verschlußeinrichtung vollständig öffnen kann, mindestens aber soweit, daß die axiale Vorspannung verloren geht. Da die Verschlußeinrichtung neben der reinen Haltefunktion im verspannten Zustand auch auf Scherung beansprucht ist, löst sie sich nicht nur im Falle verschwindender Vorspannung, sondern kann auch die Scherbeanspruchungen nicht mehr übertragen. Nachteilig bei der bekannten Verschlußeinrichtung ist auch, daß aufgrund des Ineinandergreifens von zwei Zahnscheiben als Sicherungsmittel nur ein unstetiger Spannvorgang erfolgt, was zu einem ungenügenden Verspannen der plattenförmigen Bauteile führen kann. Ferner sind auch die Zahnscheiben der bekannten Verschlußeinrichtung verhältnismäßig teuer in der Herstellung.

Hiervon ausgehend ist es Aufgabe der vorliegenden Erfindung, eine Verschlußeinrichtung der eingangs genannten Art vorzuschlagen, welche eine sicherere Übertragung der auftretenden Beanspruchungen gewährleistet, eine axiale Vorspannung entsprechend des eingeleiteten Drehmoments sicherstellt und in jedem Fall eine hinreichende Verspannung der plattenförmigen Bauteile gewährleistet.

Diese Aufgabe wird erfindungsgemäß dadurch gelöst, daß die Sicherungsscheiben als Reibscheiben ausgebildet sind, deren Berührungsflächen in Sicherungsstellung unter Haftreibung und bei Verdrehen gegeneinander unter einer dieser gegenüber geringeren Gleitreibung aneinanderliegen. Hierdurch wird ein stetiges und zuverlässiges Verspannen der plattenförmigen Bauteile gegeneinander möglich. Die Verspannung entspricht dem eingeleiteten Drehmoment. Die erfindungsgemäße Ausbildung der Sicherungsmittel beruht somit nicht auf dem Prinzip der herkömmlichen Verzahnung, bei welcher ein Rückdrehen des Zapfens entlang der Zahnflächen und somit prinzipiell ein Nachlassen oder Aufgeben der erzielten Verspannung eintreten kann, sondern die Sicherungsmittel beruhen auf dem Prinzip der Gleit- und Haftreibung. Die Haftreibung verhindert nach Einleiten des Drehmoments und Erreichen der gewünschten axialen Verspannung ein Lösen der Verbindung, da die Drehmomente, die durch die entstehende Haftreibung aufgenommen werden können, größer sind, als die Rückdrehmomente, die durch die dem Zapfen entgegenwirkenden Federmittel aufgrund der nicht selbsthemmenden Gewinde von Zapfen und Gewindebolzen entstehen. Die Verschleißerscheinungen an den Berührungsflächen der Sicherungsscheiben sind bei der erfindungsgemäßen Ausbildung gegenüber gegeneinander verdrehbaren Verzahnungen geringer und bieten zusätzlich eine höhere Sicherheit gegen Verunreinigungen und dadurch verursachtes Versagen der Verschlußeinrichtung, da sie beim Betätigen keinen Zwischenraum bilden, in welcher sich Verunreinigungen absetzen können. Die nach der Erfindung als Sicherungsscheiben eingesetzte Reibscheiben sind ferner in ihrer Herstellung kostengünstiger als die herkömmlichen Zahnscheiben.

Die Berührungsflächen der Reibscheiben können nahezu linienförmig oder ballig sein. Mit einer besonders vorteilhaften Ausgestaltung der Erfindung wird jedoch vorgeschlagen, daß die Berührungsflächen der Sicherungsscheiben von konischen inneren bzw. äußeren Umfangsflächen gebildet sind. Durch eine Veränderung des Konuswinkels kann die Verschlußeinrichtung somit sehr einfach hinsichtlich des Sicherungsmoments der Reibscheibenanordnung unter Berücksichtigung der besonderen Verhältnisse eingestellt werden.

Der Konuswinkel der Berührungsflächen der Sicherungsscheiben liegt vorzugsweise in der Nähe des Winkels der Selbsthemmung.

Um einen dauerhaft funktionsgerechten Einsatzes der erfindungsgemäßen Verschlußeinrichtung zu gewährleisten, kann wenigstens eine der Berührungsflächen der Sicherungsscheiben von einem verschleißfesten, einen Dauerschmierstoff, wie Graphit enthaltenden Material gebildet sein.

Wenn die Sicherungsscheiben unter der Wirkung der ohnehin vorhandenen Federmittel, die entgegen der Eintrittsrichtung des Zapfens wirken, aneinandergedrückt sind, ist das Sicherungsmoment abhängig von der Eindringtiefe des Zapfens.

Soll das Sicherungsmoment jedoch unabhängig von der Eindringtiefe sein, wird mit der Erfindung ferner vorgeschlagen, daß die Sicherungsscheiben zu einer Baueinheit zusammengekapselt und von einem in die Baueinheit integrierten Federelement mit von der Eindringtiefe des Zapfens in das Aufnahmeelement unabhängigen Kraft aneinandergedrückt sind.

Dieser Lösungsgedanke kann auf besonders einfache Weise dadurch realisiert werden, daß die eine der Sicherungsscheiben eine Öffnung der anderen der Sicherungsscheiben von einer Seite aus mit einer Spannkralle durchgreift und auf der Rückseite unter Zwischenlage eines Federelements hintergreift. Die genannte Baueinheit kann außerhalb des Aufnahmeelements, in der sie dann unterzubringen ist, vormontiert werden und als Ganzes in das am Boden noch vollständig offene Aufnahmeelement eingefügt werden, wodurch die Montagearbeit wesentlich erleichtert wird. Die Einkapselung der Sicherungsscheiben einschließlich des zusätzlichen Federelements kann auch dazu genutzt werden, die Gefahr von Verunreinigungen der Sicherungsscheiben weiter zu verringern.

Bei den bekannten Verschlußeinrichtungen stützt sich die zapfenabgewandte Zahnscheibe auf zwei Schraubenfedern unterschiedlichen Durchmessers ab, die so aufeinander abgestimmt sind, daß Resonanzen bei Vibrationen vermieden sind. Dieses Prinzip kann auch im Rahmen der vorliegenden Erfindung angewendet werden. Zur baulichen Vereinfachung der erfindungsgemäßen Verschlußeinrichtung wird jedoch zusätzlich vorgeschlagen, daß die gegen die Eintrittsrichtung des Zapfens wirkenden Federmittel eine einzige in ihrem Durchmesse aber unterschiedlich gewickelte Schraubenfeder aufweist.

In weiterer Ausgestaltung des Erfindungsgedankens wird ferner vorgeschlagen, die zapfenseitige Sicherungsscheibe einstückig mit dem Zapfen selbst auszubilden.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung.

Es zeigen:

Fig.1 eine zur Hälfte geschnittene Seitenansicht einer vollständigen die Erfindung aufweisenden Verschlußeinrichtung in der verspannten Stellung,

Fig. 2 eine zur Hälfte geschnittene Seitenansicht des Aufnahmeelements der Verschlußeinrichtung von Fig. 1 mit den darin aufgenommenen Bauteilen in entspannter Stellung,

Fig. 3 eine Explosionszeichnung der Verschlußeinrichtung gemäß Fig. 1 und 2,

Fig. 4 eine zur Hälfte geschnittene Seitenansicht des Aufnahmeelements einer anderen erfindungsgemäßen Verschlußeinrichtung mit den darin enthaltenen Bauteilen, und

Fig. 5 eine zur Hälfte geschnittene Seitenansicht eines für eine weitere Ausgestaltung der erfindungsgemäßen Verschlußeinrichtung bestimmten Zapfens mit einstückig daran ausgebildeter Sicherungsscheibe schematisch in Zusammenwirkung mit der zweiten Sicherungsscheibe.

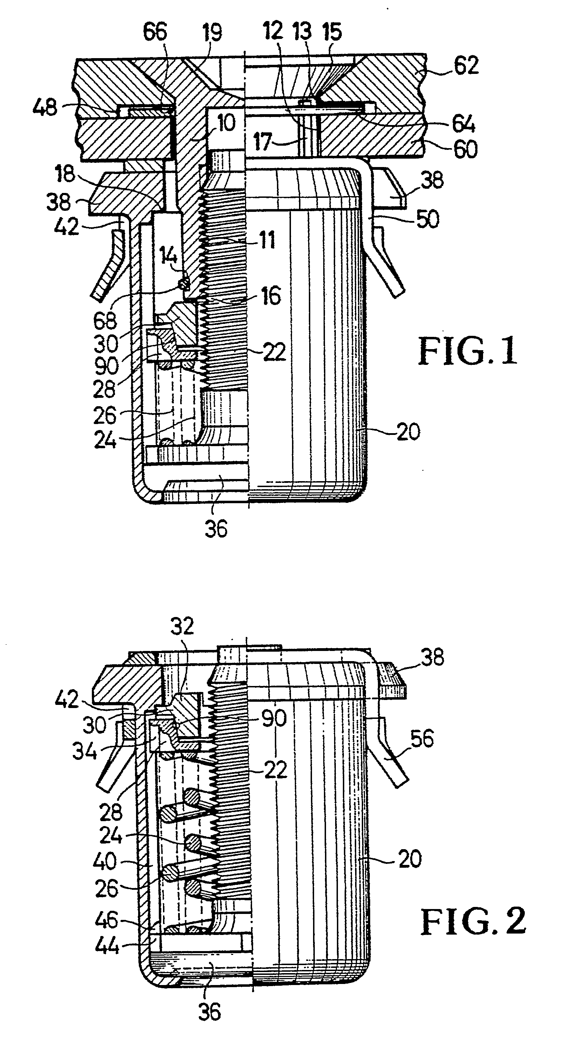

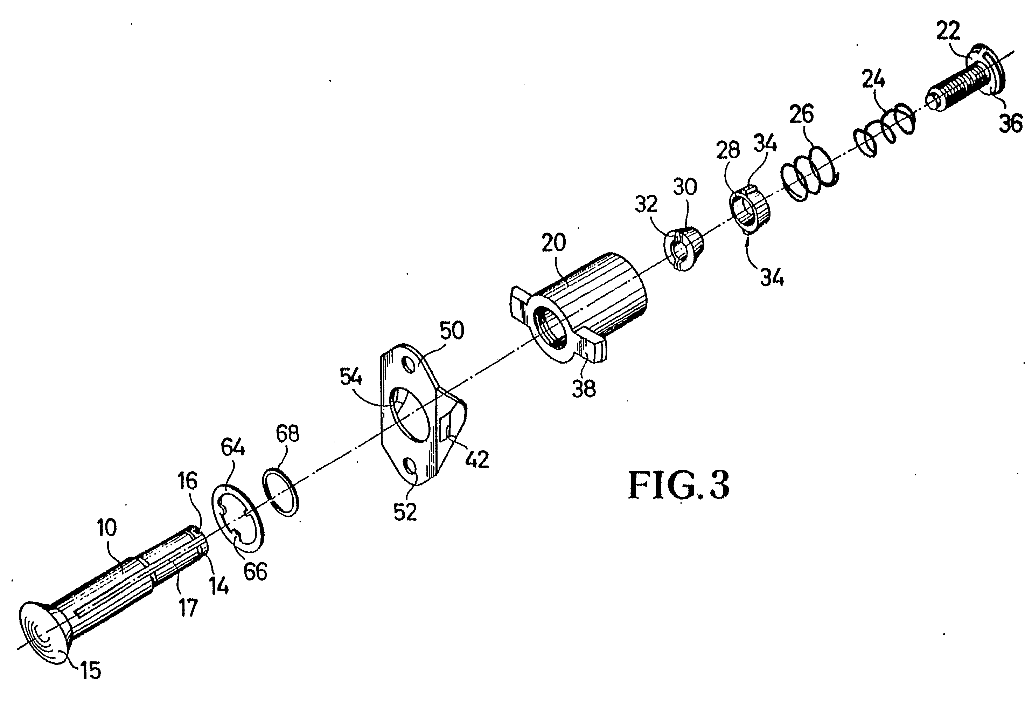

Die Verschlußeinrichtung gemäß den Fig. 1 bis 3 ist, wie aus Fig. 1 ersichtlich, für das Verbinden zweier plattenförmiger Bauteile 60 und 62 bestimmt. Sie besteht aus einem Zapfen 10, welcher durch fluchtende Öffnungen 12 und 13 der plattenförmigen Bauteile 60 und 62 geführt ist und ein Innengewinde 11 aufweist. Mit dem Zapfen 10 ist ein im wesentlichen topfförmiges Aufnahmeelement 20 über einen in seinem Inneren zentrisch angebrachten Gewindebolzen 22 verspannbar. Bei den zusammenwirkenden Gewinden von Zapfen 10 und Gewindebolzen 20 handelt es sich um vorzugsweise mehrgängige Bewegungsgewinde. Das Aufnahmeelement 20 ist mit entgegen der Eintrittsrichtung des Zapfens 10 wirkenden Schraubenfedern 24 und 26 versehen, welche zur Vermeidung von Resonanzen unterschiedlichen Durchmesser haben und deswegen auch ineinander gefügt sein können. Auf dem Gewindebolzen 22 im Aufnahmeelement 20 befinden sich zwei als Reibscheiben ausgebildete Sicherungsscheiben 28 und 30, welche ein unbeabsichtigtes Lösen des Zapfens 10 aus der verspannten Stellung verhindern. In Sicherungsstellung greifen die Sicherungsscheiben 28 und 30 mit Berührungsflächen unter Haftreibung aneinander an und bei Verdrehen gegeneinander unter einer dieser gegenüber geringeren Gleitreibung. Die zapfenseitige Sicherungsscheibe 30 ist mit Hilfe des Zapfens 10 in dem Aufnahmeelement 20 verdrehbar und bis zu einem oberen Anschlag 18 des Aufnahmeelements 20 axial verschiebbar. Zu diesem Zweck greifen Stege 32 auf der Oberseite der Sicherungsscheibe 30 in Nuten 16 auf der unteren Seite des Zapfens 10 ein. Es kann auch umgekehrt sein. Der Kopf 15 des Zapfens 10 hat eine Ausnehmung 19 für den Eingriff eines Drehwerkzeugs. Die zapfenabgewandte Sicherungsscheibe 28 ist in dem Aufnahmeelement 20 axial verschiebbar, aber drehfest. Zu diesem Zweck hat das Aufnahmeelement 20 auf seinen Innenwandflächen zwei diametral einander gegenüberliegende Nuten 40 und einen in der Nähe des Bodens befindlichen ringformigen Absatz 44. Die zapfenabgewandte Sicherungsscheibe 28 greift mit zwei an ihrer Außenseite diametral gegenüberliegend vorgesehenen Nocken 34 in die Nuten 40 ein und ist in diesen geführt, um ein Mitdrehen der Sicherungsscheibe 28 beim Öffnen oder Verschließen der Verschlußeinrichtung zu verhindern.

Die Sicherungsscheibe 30 hat einen konischen Ansatz, welcher in eine entsprechende konische Vertiefung der Sicherungsscheibe 28 hineinragt. Die Berührungsflächen der beiden Sicherungsscheiben 28 und 30 sind somit von konischen inneren bzw. äußeren Umfangsflächen gebildet. Der Konuswinkel 90 der Berührungsflächen der Sicherungsscheibe 28 und 30 liegt in der Nähe der Selbsthemmung. Er kann je nach dem gewünschten Sicherungsmoment besonders ausgewählt werden. Die Berührungsflächen der Sicherungsscheiben 28 und 30 sind von einem verschleißfesten, eine Dauerschmierstoff, wie Graphit enthaltenden Material gebildet. Bei der Ausführungsform gemäß den Fig. 1 bis 3 werden die Sicherungsscheiben 28, 30 unter der Wirkung der beiden Schraubenfedern 24 und 26 aneinandergedrückt. Damit ist das Sicherungsmoment abhängig von der Eindringtiefe des Zapfens 10.

Zur Montage des Aufnahmeelements 20 mit den darin enthaltenen Bauteilen wird als erstes die Sicherungsscheibe 30 durch eine zunächst vollständig offene Bodenöffnung des Aufnahmeelements 20 (bei einer vertikalen Lage entsprechend Fig. 1 und 2) mit nach unten gekehrtem Konus in das Aufnahmeelement 20 eingeführt. Danach wird die Sicherungsscheibe 28, mit ihrer konischen Vertiefung nach oben gegen die vorher eingeführte Sicherungsscheibe 30 gelegt. Dann werden die beiden gleich hohen Schraubenfedern 24 und 26 ineinandergeschoben hinter die Zahnscheiben 28 und 30 plaziert. Anschließend wird der Gewindebolzen 22, der auf der zum Gewinde hinweisenden Seite seines Kopfes 36 vier im Winkel von 90° zueinander angeordnete Nasen 46 besitzt, von unten in das Aufnahmeelement 20 eingeführt, bis der Kopf 36 an dem ringförmigen Ansatz 44 anliegt. Dabei wird er solange gedreht, bis zwei gegenüberliegende Nasen 46 des Kopfes 36 in die beiden Innennuten 40 des Aufnahmeelements 20 eingreifen und so ebenfalls ein Mitdrehen des Gewindebolzens 22 beim Verspannen der Verschlußeinrichtung verhindern. Darauf wird der Rand des Bodens des Aufnahmeelements 20 bis in die aus den Fig. 1 und 2 ersichtliche Lage umgebördelt, so daß der Gewindebolzen 20, die Schraubenfedern 24 und 26 sowie die Sicherungsscheiben 28 und 30 nicht wieder nach unten heraustreten können.

Das so vormontierte Aufnahmelement 20 wird daraufhin in einen Haltekäfig 50 eingesetzt, der mit zwei Nieten links und rechts von der Öffnung 12 des untersten der plattenförmigen Bauteile 60 angebracht wird. Zu diesem Zwecke weist der Haltekäfig 50 zwei Öffnungen 52 auf, die bezüglich der Durchtrittsöffnung 24 diametral einander gegenüberliegen und für die Aufnahme der Nieten bestimmt sind. Das Aufnahmelement 20 besitzt ferner zwei diametral gegenüberliegende, am Außenumfang im Bereich der Eintrittsöffnung für den Zapfen 10 befindliche Zähne 38, welche in ebenfalls diametral gegenüberliegende Aussparungen 42 von seitlich abgebogenen Lappen 56 des Haltekäfigs 50 eingreifen.

Im Bereich des dem Kopf 15 gegenüberliegenden Endes des Zapfens 10 befindet sich eine ringförmige Hinterdrehung 14. Darüber hinaus besitzt der Zapfen 10 im Winkel von 120° zueinander angeordnete und zu der Nut 16 hin offene Vertiefungen 17. In diese Vertiefungen 17 greifen die Nasen 66 eines Ringes 64 ein, welcher in einer Vertiefung 48 sitzt, die koaxial zu der Öffnung 13 des obersten der plattenförmigen Bauteile 62 angeordnet ist und sich auf der der Einführungsrichtung des Zapfens 10 entgegengesetzten Seite befindet. Durch Einsetzen eines Sprengringes 68 in die Hinterdrehung 14 des Zapfens 10 wird so ein Herausfallen des Zapfens 10 aus dem obersten Bauteil 62 verhindert.

Zum Verspannen der plattenförmigen Bauteile 60 und 62 wird der durch die Öffnungen 12 und 13 hindurchgeführte Zapfen 10 an den Gewindebolzen 22 des Aufnahmeelements 20 angesetzt. Durch anschließendes Drehen des Zapfens 10 greifen die Gewindegänge des Innengewindes 11 des Zapfens 10 und des Außengewindes des Gewindebolzens 22 ineinander. Gleichzeitig greifen die beiden Stege 32 der obersten der beiden Sicherungsscheiben 28, 30 in die Nut 16 des Zapfens 10 um die oberste Sicherungsscheibe 30 mitzunehmen. Durch Weiterdrehung des Zapfens 10 wird dieser über das Gewinde des Gewindebolzens 22 gegen die Richtung der Federkraft der Schraubenfedern 24, 26 nach unten in das Aufnahmeelement 20 gezogen. Dies erfolgt solange, bis die plattenförmigen Bauteile 60 und 62 unter vorgegebenem Drehmoment fest miteinander verspannt sind. Die beiden ineinandergreifen Sicherungsscheiben 28, 30 liegen dann mit ihren konischen Berührungsflächen unter Haftreibung aneinander und verhindern als Sicherungsmittel in diesem verspannten Zustand ein unbeabsichtigtes Lösen der Verschlußeinrichtung. Andererseits kann die Haftreibung durch Dreheingriff eines Werkzeuges in die Ausnehmung 19 des Kopfes 15 des Zapfens 10 wieder gelöst werden, so daß die beiden Sicherungsscheiben 28 und 30 während des Drehens nur noch unter der gegenüber der Haftreibung geringeren Gleitreibung gegeneinander verdrehbar sind. Auf diese Weise kann die erfindungsgemäße Verschlußeinrichtung ohne weiteres wieder gelöst werden.

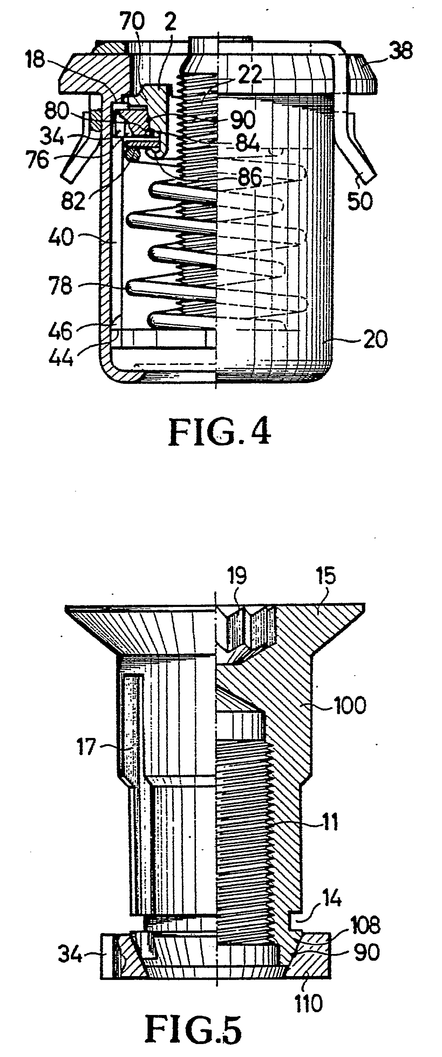

Das Ausführungsbeispiel gemäß Fig. 4 unterscheidet sich von der zuvor geschilderten Ausführungsform im wesentlichen durch folgendes: Die obere Sicherungsscheibe 70 greift durch eine Öffnung 84 der unteren Sicherungsscheibe 79 mit einer Spannkralle 86 hindurch und hintergreift die Sicherungsscheibe 76 auf ihrer Rückseite unter Zwischenlage eines flachen Federelements 82, welches der Scheibenanordnung 70, 76 ein konstantes Sicherungsmoment unabhängig von der Eindringtiefe des Zapfens 10 gibt. Die so aus den Sicherungsscheiben 70 und 76 sowie dem Federelement 82 gebildete Baueinheit 80 stützt sich auf einer einzigen Schraubenfeder 78 ab, welche zur Vermeidung von Resonanzen in ihrem Durchmesser unterschiedlich gewickelt ist.

Der in Fig. 5 dargestellte Zapfen 10 mit Innengewinde 11 unterscheidet sich von dem Zapfen 10 der Ausführungsform gemäß den Fig. 1 bis 3 dadurch, daß die obere Sicherungsscheibe 108 nicht als selbständiges Bauteil, sondern einstückig am unteren Ende des Zapfenschaftes angeformt ist und über die Berührungsflächen im Konuswinkel 90 mit der unteren Reibscheibe 110 zusammenwirkt.

Bezugszeichenliste:

10 Zapfen
11 Innengewinde
12 Öffnung
13 Öffnung
14 Hinterdrehung
15 Kopf
16 Nut
17 Vertiefung
18 Anschlag
19 Ausnehmung
20 Aufnahmeelement
22 Gewindebolzen
24 Schraubenfeder
26 Schraubenfeder
28 Sicherungsscheibe
30 Sicherungsscheibe
32 Steg
34 Nocken
36 Kopf
38 Zähne
40 Nuten
42 Aussparung
44 Absatz
46 Nasen
48 Vertiefung
50 Haltekäfig
52 Löcher
54 Durchtrittsöffnung
56 Lappen
60 Bauteile
62 Bauteil
64 Ring
66 Nasen
68 Sprengring
70 Sicherungsscheibe
76 Sicherungsscheibe
78 Federelement
80 Baueinheit
82 Federelement
84 Öffnung
86 Spannkralle
90 Konuswinkel
100 Zapfen
108 Sicherungsscheibe
110 Sicherungsscheibe

**Patentansprüche**

1. Verschlußeinrichtung zum Verbinden plattenförmiger Bauteile (60, 62), bestehend aus einem mit einem Innengewinde (11) versehenen und durch fluchtende Öffnungen (12, 13) der Bauteile (60, 62) hindurchzuführenden Zapfen (10), einem mit dem Zapfen (10) über einen in seinem Inneren zentrisch angebrachten Gewindebolzen (22) verspannbaren, im wesentlichen topfförmigen Aufnahmeelement (20), welches mit entgegen der Eintrittsrichtung des Zapfens (10) wirkenden Federmitteln (24, 26) versehen ist, und mit in dem Aufnahmeelement (20) befindlichen Sicherungsmitteln, welche ein unbeabsichtigtes Lösen des Zapfens (10) aus der verspannten Stellung verhindern und zwei auf dem Gewindebolzen (22) aufgenommene, in Sicherungsstellung aneinander angreifende Sicherungsscheiben (28, 30) aufweisen, von welchen die zapfenseitige Sicherungsscheibe (30) drehbar und bis zu einem äußeren Anschlag (18) des Aufnahmeelements (20) axial verschiebbar und die zapfenabgewandte Sicherungsscheibe (28) drehfest, jedoch axial gegen die Federmittel (24, 26) verschiebbar in dem Aufnahmeelement (20) geführt sind und wobei die zapfenseitige Sicherungsscheibe (30) bei Einwirkung eines einen bestimmten Wert überschreitenden, von dem Zapfen (10) aufgebrachten Drehmoments gegenüber der zapfenabgewandten Sicherungsscheibe (28) verdrehbar und dabei der Zapfen (10) auf den Gewindebolzen (22) bis in die verspannte Stellung aufschraubbar ist, dadurch gekennzeichnet, daß die Sicherungsscheiben (28, 30) als Reibscheiben ausgebildet sind, deren Berührungsflächen in Sicherungsstellung unter Haftreibung und bei Verdrehung gegeneinander unter einer dieser gegenüber geringeren Gleitreibung aneinander liegen.

2. Verschlußeinrichtung nach Anspruch 1, dadurch gekennzeichnet, daß die Berührungsflächen der Sicherungsscheiben (28, 30) von konischen inneren bzw. äußeren Umfangsflächen gebildet sind.

3. Verschlußeinrichtung nach Anspruch 2, dadurch gekennzeichnet, daß der Konuswinkel (90) der Berührungsflächen der Sicherungsscheiben (28, 30) in der Nähe des Winkels der Selbsthemmung liegt.

4. Verschlußeinrichtung nach einem der Ansprüche 1 bis 3, dadurch gekennzeichnet, daß wenigstens eine der Berührungsflächen der Sicherungsscheiben (28, 30) von einem verschleißfesten, einen Dauerschmierstoff, wie Graphit enthaltenden Material gebildet ist.

5. Verschlußeinrichtung nach einem der Ansprüche 1 bis 4, dadurch gekennzeichnet, daß die Sicherungsscheiben (28, 30) unter der Wirkung der Federmittel (24, 26) aneinandergedrückt sind.

6. Verschlußeinrichtung nach einem der Ansprüche 1 bis 4, dadurch gekennzeichnet, daß die Sicherungsscheiben (28, 30) zu einer Baueinheit (80) zusammengekapselt und von einem in die Baueinheit (80) integrierten Federelement (82) mit von der Eindringtiefe des Zapfens (10) in das Aufnahmeelement (20) unabhängigen Kraft aneinanderdrückt sind.

7. Verschlußeinrichtung nach Anspruch 6, dadurch gekennzeichnet, daß die eine (70) der Sicherungsscheiben (70, 76) eine Öffnung (84) der anderen (76) der Sicherungsscheiben (70, 76) von einer Seite aus mit einer Spannkralle (86) durchgreift und auf der Rückseite unter Zwischenlage eines Federelements (82) hintergreift.

8. Verschlußeinrichtung nach einem der Ansprüche 1 bis 7, dadurch gekennzeichnet, daß die gegen die Eintrittsrichtung des Zapfens (10) wirkenden Federmittel (78) eine in ihrem Durchmesser unterschiedlich gewickelte Schraubenfeder aufweisen.

9. Verschlußeinrichtung nach einem der Ansprüche 1 bis 8, dadurch gekennzeichnet, daß die zapfenseitige Sicherungsscheibe (108) einstückig mit dem Zapfen (100) ausgebildet ist.

## Claims

1. A fastener for joining plate–shaped components (60,62), consisting of a pin (10) having an internal thread (11) and insertable through registering holes (12,13) in the components (60,62), a substantially cup–shaped receptacle (20), which can be tightened on to the pin (10) by means of an internal, centrally located, threaded bolt (22) and is provided with springs (24,26) acting oppositely to the direction of insertion of the pin (10),and securing means disposed inside the receptacle (20), which prevent the accidental loosening of the pin (10) from its tightened state, and have a pair of securing collars (28,30) seated on the threaded bolt (22) and engaging each other in the secured state, of which the securing collar (30) nearer the pin is free to rotate and move axially as far as an outer stop (18) on the receptacle (20), whilst the other securing collar (28) is unable to rotate but can move axially against the springs (24,26) within the receptacle (20), the securing collar (30) nearer the pin being rotatable relative to the further securing collar (28) under the action of a torque applied by the pin (10) and exceeding a prescribed value, so that the pin (10) can be screwed on to the threaded bolt (22) into a stressed position, characterized in that the securing collars (28,30) are adapted as friction collars having contact faces which in the tightened state engage under stiction, and on relative rotation engage each other under comparatively lower sliding friction.

2. A fastener as in Claim 1, characterized in that the contact faces of the securing collars (28,30) are formed from tapering internal and external peripheral faces respectively.

3. A fastener as in Claim 2 characterized in that the angle (90) of the tapered contact faces on the securing collars (28,30) approximates to the locking angle.

4. A fastener as in any of Claims 1 to 3, characterized in that at least one of the contact faces on the securing collars (28,30) consists .of a wear resisting material containing a permanent lubricant such as graphite.

5. A fastener as in any of Claims 1 to 4, characterized in that the securing collars (28,30) are urged together under the action of the springs (24,26).

6. A fastener as in any of Claims 1 to 4, characterized in that the securing collars (28,30) are encapsulated as a unit (80), and are urged together by a spring elements (82) integrated into the unit (80), under a force independent of the depth of insertion of the pin (10) into the receptacle (20).

7. A fastener as in Claim 6, characterized in that a tightening claw (86) on one (70) of the securing collars (70,76) protrudes laterally through a hole (84) in the other (76) of the securing collars(70,76) and engages behind the rear face through an interposed spring element (82).

8. A fastener as in any of Claims 1 to 7, characterised in that the spring elements (78) acting against the direction of insertion of the pin (10) have coil springs wound to different diameters.

9. A fastener as in any of Claims 1 to 8,characterized in that the securing collar (108) nearer the pin (100) is made integral therewith.

## Revendications

1. Dispositif d'assemblage pour relier des éléments de construction (60, 62) sous forme de plaques, constitué par un goujon (10) muni d'un filet intérieur (11) et destiné à être engagé à travers des ouvertures (12, 13) alignées des éléments de construction (60, 62), par un organe de réception (20) sensiblement en forme de godet qui est susceptible d'être serré avec le goujon (10) par l'intermédiaire d'une vis (22) disposée de manière centrée à l'intérieur du goujon, et qui est uni de moyens de ressort (24, 26) agissant dans le sens opposé à la direction d'engagement du goujon (10), et par des moyens de blocage qui se trouvent à l'intérieur de l'organe de réception (20), qui empêchent un desserrage non intentionnel du goujon (10) et qui présentent deux rondelles de blocage (28, 30) en contact l'une avec l'autre lorsqu'elles sont en position de blocage, la rondelle de blocage (30) côté goujon étant mobile en rotation et déplaçable axialement jusqu'à une butée extérieure (18) de l'organe de réception (20) et la rondelle de blocage (28) éloignée du goujon étant immobilisée en rotation mais déplaçable axialement contre l'action des moyens de ressort (24, 26) dans l'organe de réception, et la rondelle de blocage (30) côté goujon pouvant être tournée par rapport à la rondelle de blocage (28) éloignée du goujon en cas de couple exercé par le goujon (10) et dépassant une valeur déterminée, et le goujon (10) pouvant ainsi être vissé sur la vis (22) jusqu'à atteindre la position serrée, caractérisé par le fait que les rondelles de blocage (28, 30) sont réalisées sous forme de rondelles de frottement dont les surfaces de contact sont en contact de frottement d'adhérence, lorsqu'elles sont en position de blocage, et en contact de frottement de glissement plus faible, lorsqu'elles tournent l'une par rapport à l'autre.

2. Dispositif d'assemblage selon la revendication 1, caractérisé par le fait que les surfaces de contact des rondelles de blocage (28, 30) sont formées par des surfaces périphériques intérieures /extérieures coniques.

3. Dispositif d'assemblage selon la revendication 2, caractérisé par le fait que l'angle de cône (90) des surfaces de contact des rondelles de blocage (28, 30) est au voisinage de l'angle d'auto-blocage.

4. Dispositif d'assemblage selon l'une des revendications 1 à 3, caractérisé par le fait qu'au moins une des surfaces de contact des rondelles de blocage (28, 30) est constituée par un matériau résistant à l'usure et contenant une substance de lubrification permanente tel que du graphite.

5. Dispositif d'assemblage selon l'une des revendications 1 à 4, caractérisé par le fait que les rondelles de blocage (28, 30) sont pressées l'une contre l'autre sous l'action des moyens de ressort (24, 26).

6. Dispositif d'assemblage selon l'une des revendications 1 à 4, caractérisé par le fait que les rondelles de blocage (28, 30) sont encapsulées pour former un composant (80) et sont pressées l'une contre l'autre par un organe de ressort (82) intégré dans le composant (80), avec une force qui est indépendante de la profondeur de pénétration du goujon (10) dans l'organe de réception (20).

7. Dispositif d'assemblage selon la revendication 6, caractérisé par le fait que l'une (70) des rondelles de blocage (70, 76) comporte un crampon de serrage (86) traversant une ouverture (84) de l'autre (76) des rondelles de blocage (70, 76) à partir d'un côté et s'engage derrière la face arrière de cette autre rondelle par l'intermédiaire d'un organe de ressort (82).

8. Dispositif d'assemblage selon l'une des revendications 1 à 7, caractérisé par le fait que les moyens de ressort (78), agissant dans le sens opposé à la direction d'engagement du goujon (10), présentent un ressort hélicoïdal ayant des spires de diamètres différents.

9. Dispositif d'assemblage selon l'une des revendications 1 à 8, caractérisé par le fait que la rondelle de blocage (108) côté goujon est réalisée d'une seule pièce avec le goujon (100).

FIG.1

FIG.2

FIG.3

EP 0 310 775 B1

**FIG. 4**

**FIG. 5**